# EUROPEAN PATENT APPLICATION

(11) **EP 0 834 374 A1**
(43) Date of publication of application: **08.04.1998**
(21) Application number: 97116276.3
(22) Date of filing: 18.09.1997
(51) Int. Cl.: B23D 35/00, F16C 25/04, B23D 15/00

(54) **Work cutting apparatus**

(30) Priority: 02.10.1996 JP 281888/96
(71) Applicant: Murata Kikai Kabushiki Kaisha, Minami-ku, Kyoto-shi, Kyoto 601 (JP)
(72) Inventor: Sahashi, Nobuo, Inuyama-shi, Aichi (JP)
(74) Representative: Liedl, Christine, Dipl.-Chem.

(57) **Abstract**

A device that is able to reduce the variation in the clearance between the upper and lower blades and of which the clearance adjustment operation is simple. The work cutting apparatus has a freely rotating ram mounted with an upper blade. An axial direction pressure application means that prevents any play in the axial direction at the bearing being the rotating pivot of this ram by the application of pressure is arranged. The axial direction pressure application means applies pressure in the axial direction to the inner wheel of the bearing via the spacer by a cylinder attached to the rotating support shaft and pressurizes the bearing. The pair of upper and lower blades each form an approximate L-shape and the rotating support shaft is positioned such that it is at an angle within the horizontal plane with respect to each side of the upper and lower blades.

## Description

### Field of the Invention

The present invention relates to a work cutting apparatus such as a right angle shear or the like that cuts work such as plate metal or the like by a pair of upper and lower blades.

### Background of the Invention

A device whereby the upper blade is vertically moved by a guide is known as this type of conventional work cutting apparatus. However, on this kind of apparatus whereby the upper blade is moved vertically, the system for vertical movement and guiding the vertical movement of the upper blade becomes complicated and increases the costs.

In order to solve these kind of problems, an apparatus has been proposed where a ram mounted with the upper blade is rotated vertically about a horizontal rotating support shaft. Accordingly, the vertical movement system of the upper blade is simplified and the cost is decreased.

However, on an apparatus that vertically moves a ram, it is difficult to prevent variation in the clearance between the upper and lower blades.

Hereafter, an explanation will be given of this.

It is necessary to adjust the clearance between the upper and lower blades to a suitable value in response to the thickness of the work being the material to be cut and an adjustment operation is performed when a lot of the material is exchanged. The present applicant has proposed using an eccentric shaft on the rotating support shaft, changing the position of the rotation center of the ram by adjusting the angle of rotation of the eccentric shaft and thus adjusting the clearance as a means for adjustment of the clearance between the upper and lower blades. However, minute play is generated at the bearing arranged between the rotating support shaft being that eccentric shaft and the ram, the hearing rigidity is insufficient and variation is generated in the clearance between the upper and lower blades. As the upper and lower blades on the right angle shear are long, the slight play and lack of rigidity in the bearing leads to variation in the clearance. This variation can be reduced by applying pressure to the bearing but resistance to the operations performed when clearance adjustment is carried out due to rotation of the eccentric shaft is generated while in the pressurized state and thus the adjustment operation is difficult to perform.

### Summary of the Invention

In order to solve these problems, it is an object of the present invention to propose a work cutting device that is able to reduce the variation in the clearance between the upper and lower blades and for which the clearance adjustment operation is simple.

The work cutting apparatus of the present invention cuts by a pair of upper and lower blades, has a freely rotatable ram mounted with the upper blade and is arranged with an axial direction pressure application means which can freely remove the pressure being applied and which exerts pressure in the axial direction on the rotation pivot of the ram.

Accordingly, as the rotation pivot of the ram is pressured in the axial direction by the axial direction pressure application means and due to this, as play in the axial direction with respect to the rotation pivot of the ram is prevented, the variation in the clearance of the upper blade and lower blade due to this play may be removed. When adjusting the clearance, the pressure application by the axial direction pressure application means is removed and due to this, operations such as positional change of the rotation pivot for clearance adjustment or the like are not hindered by the applied pressure and the clearance adjustment operations may be easily performed.

On the work cutting apparatus, the rotation pivot is a bearing having an inner wheel mounted on the rotation support shaft and an outer wheel mounted on the ram and the axial direction pressure application means may exert pressure in the axial direction on the bearing. The bearing may support an axial directional force of a certain degree and a slide hearing such as a spherical bearing or the like. With this arrangement, the rotation of the ram is stable due to the high support rigidity of the bearing by pressurizing the bearing and the variation in clearance between the upper and lower blades is reduced. Furthermore, by removing the pressurization of the bearing, there is no hindrance due to pressurization to the adjustment operations on the bearing for clearance adjustment and clearance adjustment operations may be easily performed.

Furthermore, on this arrangement, the pair of upper and lower blades are approximately L-shaped and the rotating support shaft may be arranged at an angle within a horizontal plane with respect to each side of the pair of upper and lower blades. When the rotating support shaft is angled in this way, the clearance adjustment of each side of the blade forming the L-shape may be performed simultaneously and the variation in the clearance of each side may also be removed simultaneously by applying pressure by the axial direction pressure application means.

Yet further, an eccentric system that moves the rotation pivot of the ram forwards and backwards is arranged and as the axial direction pressure application means supports the rotation pivot in a uniform position in the axial direction, a pressure is exerted on the rotation pivot and moreover, as the rotation pivot is allowed to move forwards and backwards, the exerted force may be removed.

### Brief Description of the Drawing

Figure 1 is a partially omitted plan view of the work cutting apparatus being one embodiment of the present invention.

Figure 2 is a front view of the work cutting apparatus being one embodiment of the present invention.

Figure 3 is a right side view of the work cutting apparatus being one embodiment of the present invention.

Figure 4 is a left side view of the work cutting apparatus being one embodiment of the present invention.

Figure 5 is a perspective view of the outer appearance of a work processing apparatus provided with the work cutting apparatus being one embodiment of the present invention.

Figure 6 is plan view of a work processing apparatus provided with the work cutting apparatus being one embodiment of the present invention.

Figure 7 is an enlarged plan view showing the main part of the work cutting apparatus being one embodiment of the present invention.

Figure 8 is an explanatory diagram of the actions of the exertion means on the work cutting apparatus being one embodiment of the present invention.

Figure 9A is an enlarged horizontal section showing the attachment part of the rotating support shaft on the work cutting apparatus being one embodiment of the present invention, Figure 9B is an enlarged horizontal section showing the axial direction pressure application means on the work cutting apparatus being one embodiment of the present invention and Figure 9C is an enlarged side view of the axial direction pressure application means of the work cutting apparatus being one embodiment of the present invention.

Figure 10A is a vertical section showing the movable blade adjustment means on the work cutting apparatus being one embodiment of the present invention, Figure 10B is a side view showing the main part of the movable blade adjustment means on the work cutting apparatus being one embodiment of the present invention and Figure 10C is an explanation of the adjustment actions.

### Detailed Description of the Preferred Embodiments

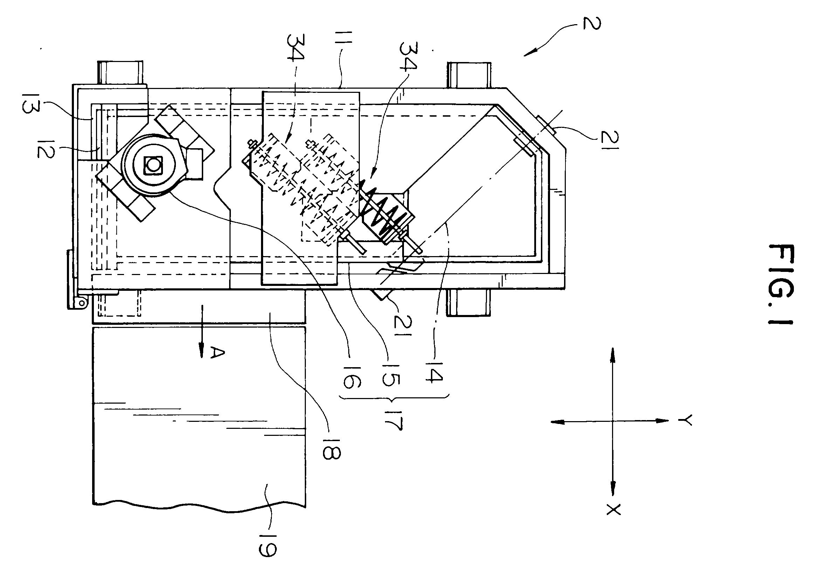

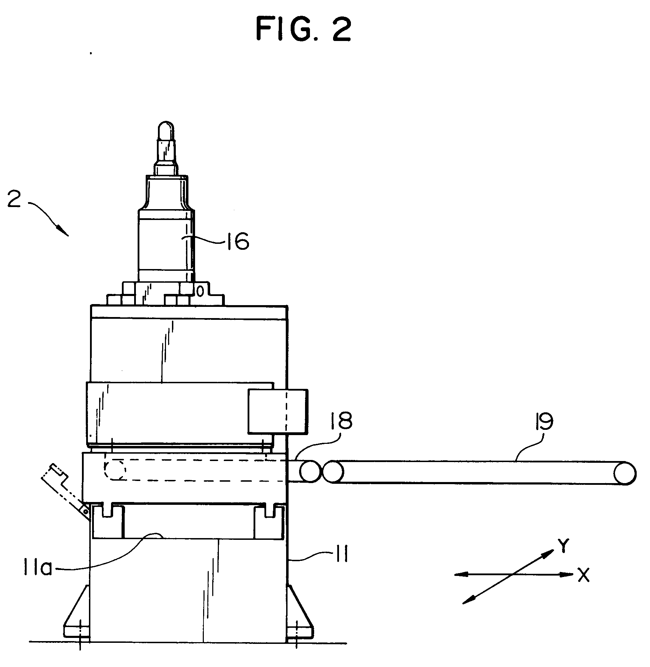

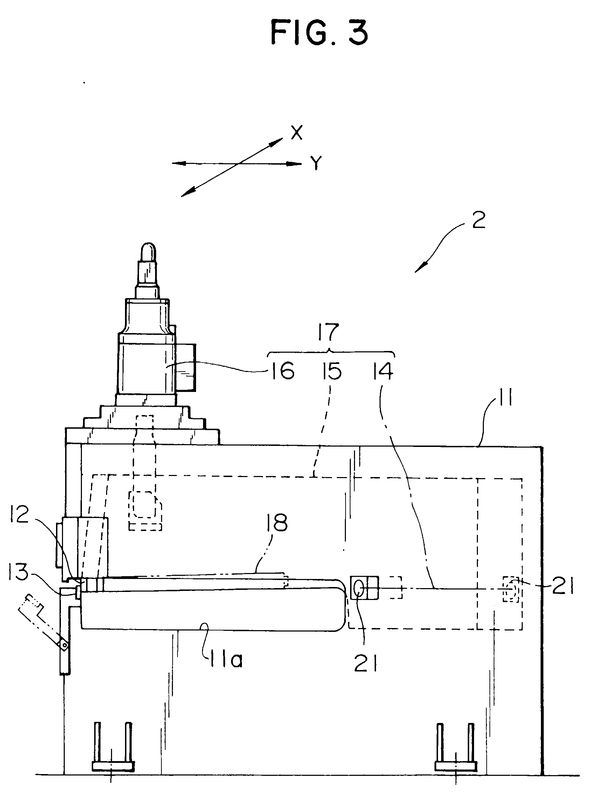

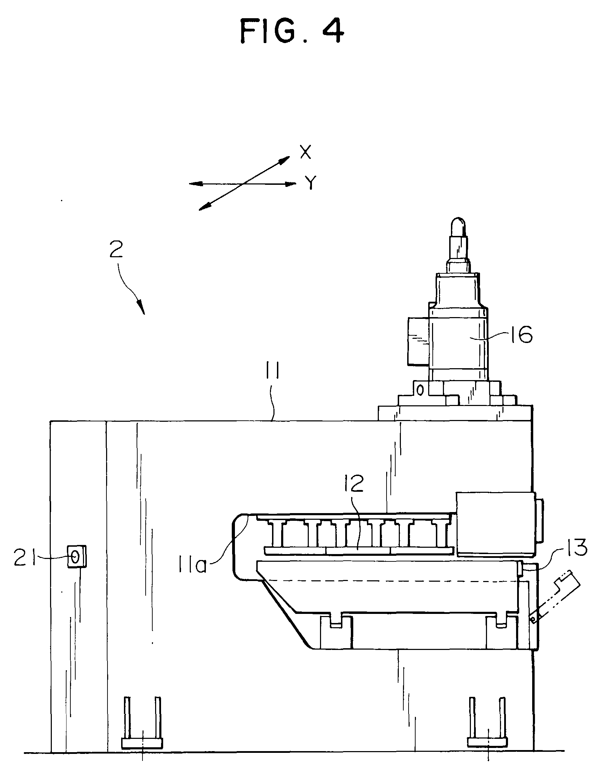

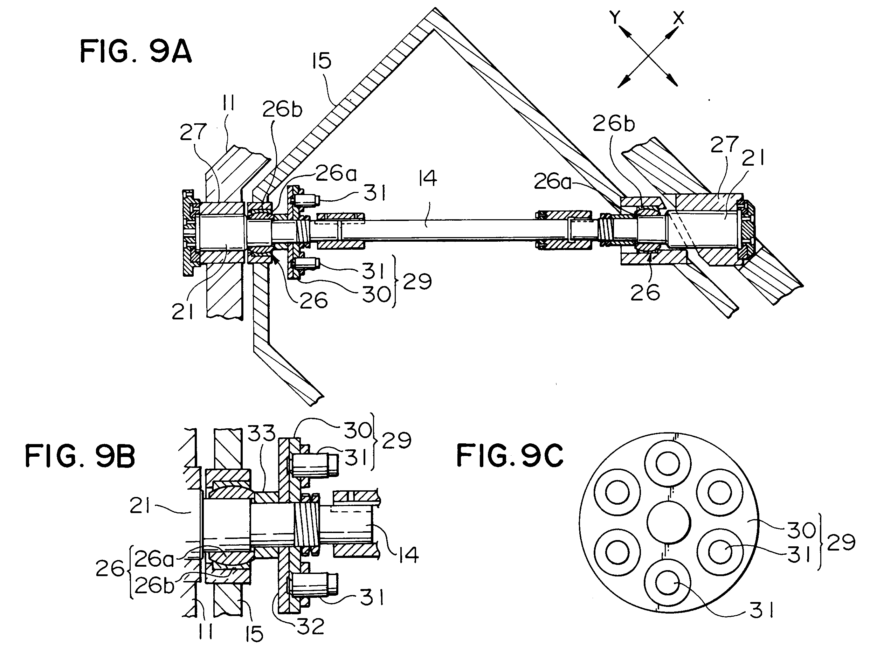

Hereafter, a first embodiment of the present invention will be described using Figures 1 through 10.

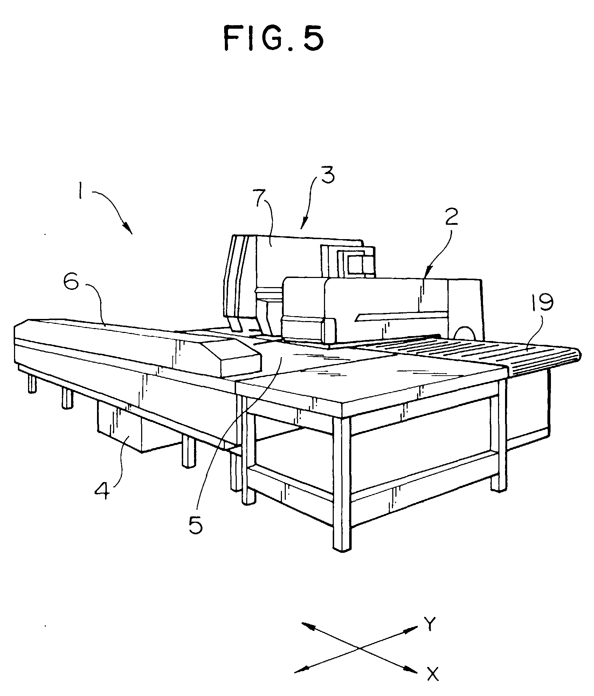

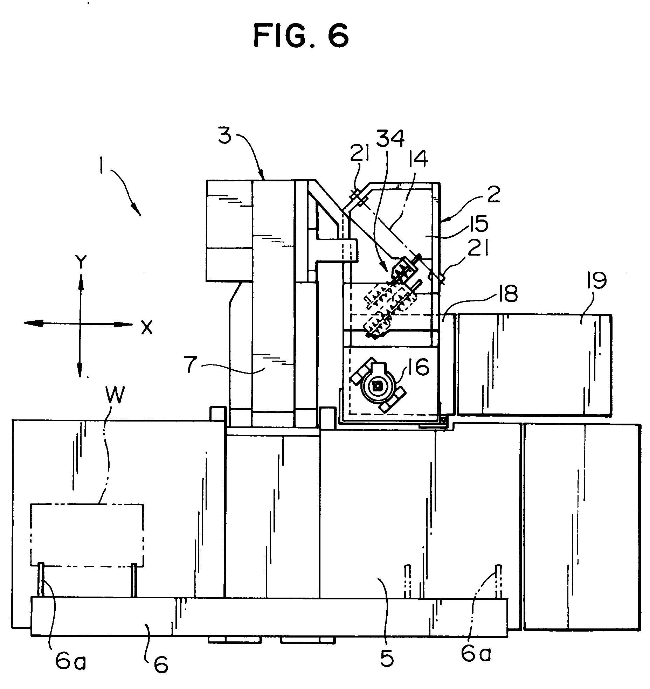

Figures 5 and 6 show a perspective view and plan view of the work processing apparatus provided with a work cutting apparatus being a first embodiment of the present invention.

A work processing apparatus 1 is arranged with a turret type punch press device 3 adjacent to a work cutting apparatus 2 and comprises a compound device where both a work table 5 and work delivery device 6 are common to both devices 2,3. The work delivery device 6 holds work W on the work table 5 by a work holder 6a, moves it in the left and right direction (X-axis direction) and front/back direction (Y-axis direction), spans both the cut processing part of the work cutting apparatus 2 and the punch press device 3 and has a delivery range enabling delivery of the work W in the held state.

To the rear of a bed 4, a C-shaped punch frame 7 of the punch press 3 is arranged and an upper turret (not shown in the drawings) with a plurality of punch tools arranged in series, a lower turret (not shown in the drawings) with a plurality of die corresponding to each of the aforementioned punch tools are arranged in series, and a punch driving system (not shown in the drawings) that vertically drives the punch tool at a predetermined punch position.

The work cutting apparatus 2 cuts the work W which has had holes opened in it by the punch press device 3 and which is delivered by the work delivery device 6 and as shown in the plan view, front view, right side view and left side view of Figures 1, 2, 3, and 4, has a movable blade 12 and fixed blade 13 positioned vertically opposite each other on a frame 11 being the work cutting apparatus main body. The frame 11 is a vertical rectangular box shape with a cut away shaped open part 11a existing from the front surface to the middle of both sides and due to this, the side shape of the frame forms a C-shape. The fixed blade 13 being the lower blade has a flat shape that curves in an L-shape from the left-right direction (X-axis direction) to the front-back direction (Y-axis direction) and is positioned along the inside lower edge of the cut away open part 11a of the frame 11. The movable blade 12 being the upper blade has a flat L-shape following the inside of the fixed blade 13 and the blade tip is arranged with one type of slant (rake angle) from one end to the other end via the center curve part.

The movable blade 12 is mounted on the lower part of the tip of the ram 15 supported so as to be able to freely rotate vertically via the rotating support shaft 14 on the rear part of the frame 11. A drive device 16 that vertically moves the ram 15 is arranged on the front upper surface of the frame 11 and this ram drive system 16, the ram 15, rotating support shaft 14 and the like form a movable blade drive system 17 that moves the movable blade 12 vertically. Due to the vertical movement the driving of the drive system 17, the movable blade 12 engages with the fixed blade 13 and a cutting process is performed by the shearing of the work W.

Furthermore, a conveyor 18 that ejects in the transport direction A parallel with the X-axis direction, the cut sample cut from the work W by the movable blade 12 and fixed blade 13, is arranged on the inside of the frame 11. A secondary conveyor 19 that further moves the cut samples which have transported by the conveyor 18 is positioned on the next level of the conveyor 18.

As shown in the plan views of Figure 1, Figure 7 and Figure 9, the rotating support shaft 14 is set so that the axial direction is angled with respect to both sides of the L-shaped fixed blade 13, for example, in a direction angled 45° with respect to both the X-axis and Y-axis. The ram 15 is supported with respect to this rotating support shaft 14 so as to be able to freely rotate via bearings 26 at both sides. These bearings 26 form the rotation pivot of the ram 15. A spherical bearing having an inner wheel 26a mounted on the rotating support shaft 14 and an outer wheel 26b mounted on the ram 15 is used as the bearings 26.

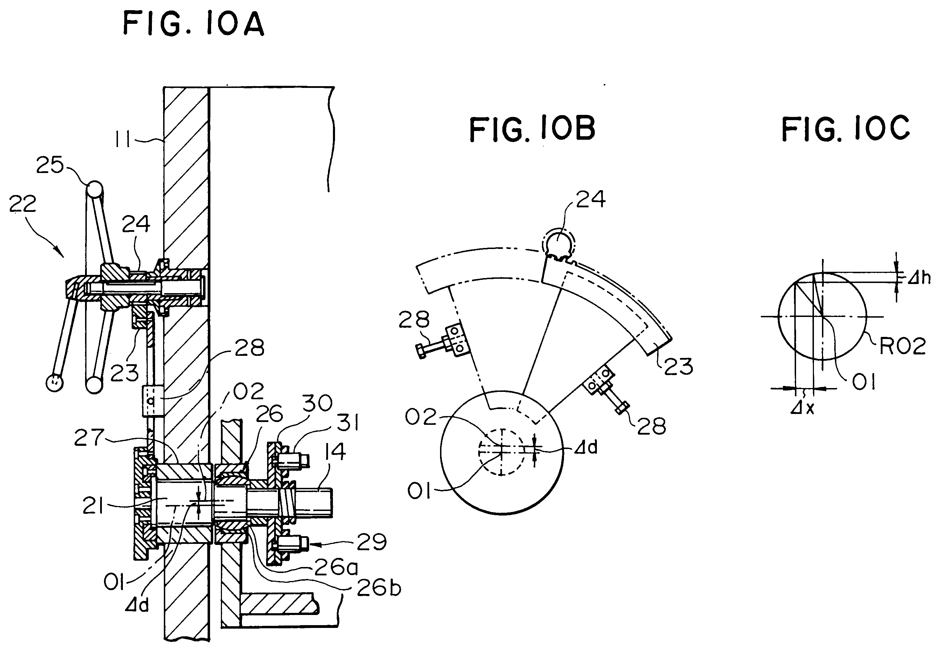

Furthermore, as shown in the vertical section of Figure 10A, the rotating support shaft 14 is arranged off center and as one unit with the rotation shaft 21 support via a seat 27 on the frame 11. Specifically, when the rotation shaft 21 is in the standard rotation position, the shaft center O2 of the rotating support shaft 14 is slightly off-center upwards by the amount Δd with respect to the shaft center O1 of the rotation shaft 21. Furthermore, when the rotation shaft 21 is in the standard rotation position, the clearance of the horizontal direction of the movable blade 12 with respect to the fixed blade 13 is set to be the optimum for cutting the work W of a predetermined thickness.

A manual type movable blade adjustment means 22 is linked to the rotation shaft 21. The movable blade adjustment means 22 is a means for adjusting the horizontal position of the movable blade 12 with respect to the fixed blade 13 by minute changes to the front and rear of the shaft center of the rotating support shaft 14 by rotating the rotation shaft 21. This movable blade adjustment means 22 comprises a sector gear 23 fixed to the end of the rotation shaft 21 and an adjustment handle 25 having a pinion 24 on the shaft part that engages with this sector gear 23. The adjustment handle 25 is mounted on the frame 11 so as to be freely rotatable.

When the adjustment handle 25 is rotated, the rotation shaft 21 rotates in a direction opposite the adjustment handle 25 by an amount equivalent to the amount the adjustment handle 25 was rotated and the position of the rotating support shaft 14 is adjusted to the front and rear. Due to this, the clearance of the movable blade 12 with respect to the fixed blade 13 is adjusted corresponding to the thickness of the work W to be cut.

As the rotating support shaft 14 is positioned at an angle 45° with respect to both sides of the fixed blade 13, adjustment for both the side following the X-axis direction of the movable blade 12 and Y-axis direction may be simultaneously performed by the aforementioned single adjustment.

Furthermore, there is no need to arrange the movable blade adjustment means 22 for each side and one is sufficient and has a simple arrangement.

It should be noted that the adjustment amount by the movable blade adjustment means 22 is limited by a pair of stoppers 28 which contact the sector gear 23 arranged on the frame.

Furthermore, the movable blade adjustment means 22 is a manual type as shown in the drawing but may be a driven type that changes the rotation angle of the rotation shaft 21 with a servomotor or the like as a drive source.

Figure 10C shows the rotation path R02 of the shaft center O2 of the rotating support shaft 14 with respect to the shaft center O1 of the rotation shaft 21 in association with the movable blade adjustment. As shown clearly in the drawing, the position of the rotating support shaft 14 changes not only towards the front and rear but also vertically but as previously described by the movable blade adjustment means but when the rotation shaft 21 is in the standard rotation position, as the shaft center O2 of the rotating support shaft 14 is eccentric upwards from the shaft center 01 of the rotation shaft 21, the vertical positional change amount Δh is extremely small compared to the positional change Δx to the front and rear of the rotating support shaft 14 by the adjustment and considering the size of the ram 15, the vertical positional change may be ignored. Furthermore, the larger the distance between the rotating support shaft 14 and movable blade 12, the more insignificant this vertical positional change.

Furthermore, an axial direction pressure application means 29 that prevents play in the axial direction of the ram 15 with respect to this rotating support shaft 14 is arranged on the rotating support shaft 14. This axial direction pressure application means 29 comprises a plurality of hydraulic cylinders 31 mounted on a support plate 30 fixed to the rotating support shaft 14, a pressure plate 32 linked to a piston rod 31a of each cylinder 31 and freely fitted to the rotating support shaft 14, and a spacer 33 intervening between this pressure plate 32 and the inner wheel 26a of the bearing 26. The plurality of cylinders 31 are evenly distributed around the periphery of the rotating support shaft 14.

When the pressure plate 32 applies pressure to the bearing 26 side by the projection of the cylinder 31, that applied pressure is exerted on the inner wheel 26a of the bearing via the spacer 33. Due to this, as the rotating support shaft 14 is pushed in a direction opposite to that which the pressure is applied, play in the axial direction of the ram 15 with respect to the rotating support shaft 14 is removed and the bearing 26 enters a pressurized state. As a result, the variation in clearance of between the movable blade 12 and fixed blade 13 arising from play of the ram 15 and inadequate support rigidity of the bearing 26 is prevented.

In particular, in the present embodiment, as the rotating support shaft 14 is set in a direction at an angle with respect to all the sides of the movable blade 12 and fixed blade 13, the variation in the clearance at both sides of the movable blade 12 and fixed blade 13 may be prevented by the actions of the axial direction pressure application means 29.

It should be noted that when the movable blade 12 is to be adjusted as described previously, it is possible to remove the pressure on the inner wheel 26a of the bearing 26 by removing the projection of the cylinder 31 and rotating the rotating support shaft 14 with respect to the bearing 26 with no resistance.

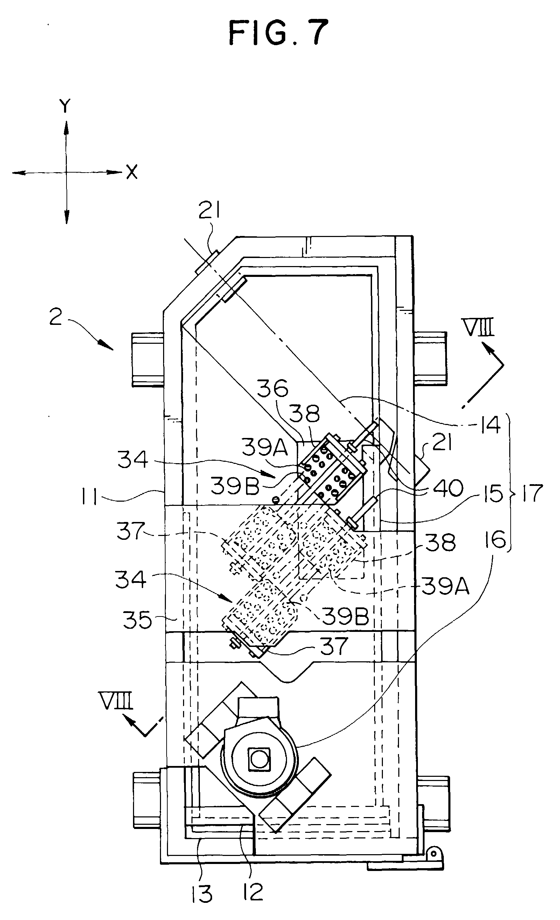

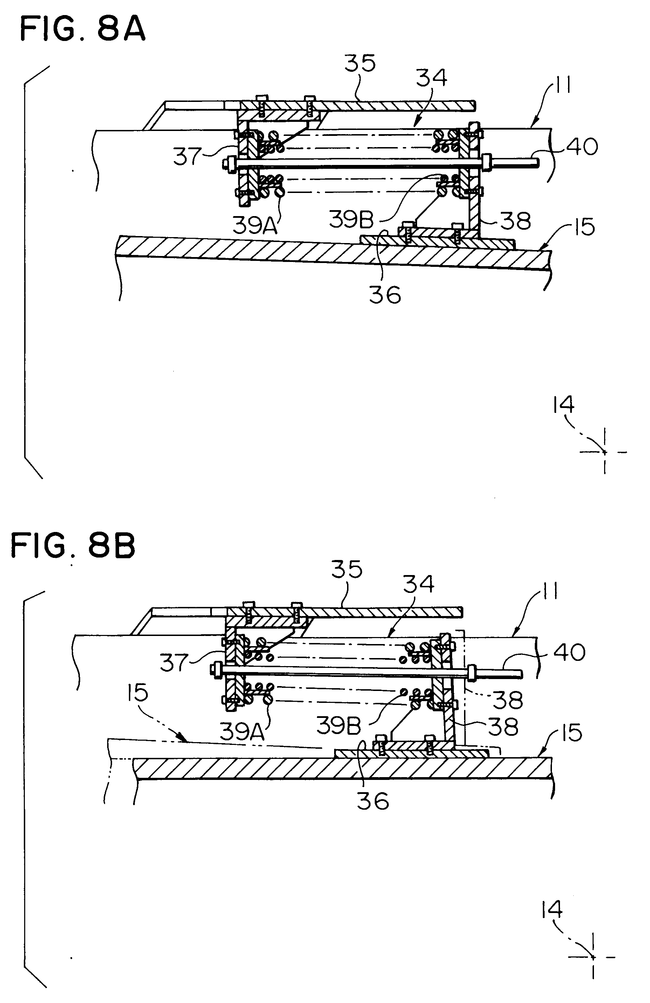

As shown in the plan view and vertical section of Figures 7 and 8, two exertion means 34 that push the ram 15 in the upwards rotation direction are arranged between the upper part of the frame 11 and the upper part of the ram 15.

These exertion means 34 comprise a spring receptor member 37 fixed to the upper support plate 35 of the frame 11, a spring receptor member 38 fixed to the upper support plate 36 of the ram 15, a plurality of compressed coil springs 39A,39B that fit on both of these spring receptor members 37,38 and a center rod 40 inserted loosely into both spring receptor members 37,38 such that it can not be removed. A uniform rigidity is applied to the exertion means 34 by the center rod 40. This exertion means 34 is set horizontally, such that the axial direction, in short, the direction of the center rod 40 is at right angles to the rotating support shaft 14. Due to this, the horizontal component of the exerted force of the exertion means 34 is at right angles to the rotating support shaft 14 of the ram 15.

It should be noted that in the present embodiment, in order for enough exerted force of the exertion means 34 to be generated, the two exertion means 34 are positioned parallel to each other in the same direction, in short, the ends of the compressed coil springs 39A,39B of each exertion means 34 are each aligned along the vertical side of the upper and lower blades 12,13. In this way, each of the exertion means 34 comprises a plurality of compressed coil springs 39A,39B and due to the arrangement of two exertion means 34, the exertion means 34 having sufficient exertion force may be compactly positioned in the restricted space between the upper part of the frame 11 and the upper part of the ram 15.

The exertion means 34 exerts a force on the ram 15 in the upwards rotating direction as shown in Figure 8A as the horizontal component of the exerted force of the compressed coil springs 39A,39B is at right angles with respect to the rotating support shaft 14 above the rotating support shaft 14. Due to this, the ram 15 always forcibly returns to the home position in the raised position by the exertion means 34, is safe and enables simple maintenance inspection and repair operations even when there are problems such as the stoppage of the drive device 16 due to a power failure.

Furthermore, the exertion means 34 is positioned at right angles with respect to the rotating support shaft 14 and as the exertion means 34 rotates in the same direction as the rotation of the ram 15, the clearance between the upper and lower movable blade 12 and fixed blade 13 due to the existance of the exertion means 34 changes and the ram 15 can be prevented from being slack.

It should be noted that when the ram 15 is rotated downwards by the ram drive device 16, the ram drive device 16 works against the exerted force of the exertion means 34 as shown in Figure 8B.

The work cutting apparatus of the present invention cuts by a pair of upper and lower blades, has a freely rotating ram mounted with an upper blade and is arranged with axial direction pressure application means which can freely remove the pressure being applied and which exerts pressure in the axial direction on the rotation pivot of the ram thus the variation in the clearance between the upper and lower blades may be reduced by applying a pressure in the axial direction to the rotation pivot, hindrance to the clearance adjustment by the applied pressure is prevented by removal of the pressure and the clearance adjustment may be easily performed.

In this arrangement, the rotation pivot is a bearing having an inner wheel mounted on the rotation shaft and an outer wheel mounted on the ram and when the axial direction pressure application means exerts a pressure in the axial direction on the bearing, the rotation of the ram is stable due to the increased support rigidity of the bearing by the pressurization of the bearing, and the variation in the clearance between the upper and lower blades is reduced. Furthermore, hindrance due to pressurization to the adjustment operation of the bearing in order to adjust the clearance is reduced and the clearance adjustment operartion may be simply performed.

Furthermore, in this arrangement, when the pair of upper and lower blades are approximately L-shaped and the rotating support shaft is positioned at an angle within a horizontal plane with respect to each side of the pair of upper and lower blades, the clearance adjustment of each side of the blade forming the L-shape may be performed simultaneously and the variation in the clearance of each side may also be removed simultaneously by pressurizing the by the axial direction pressure application means. Accordingly, the variation in clearance on both sides may be removed by a simple arrangement.

## Claims

1. A work cutting apparatus that cuts by a pair of upper and lower blades, arranged with,
a freely rotating ram mounted with the upper blade, and
an axial direction pressure application means for applying pressure in the axial direction to the rotation pivot of the ram and of which the applied pressure may be removed.

2. A work cutting apparatus as in claim 1, wherein the rotation pivot is a bearing having an inner wheel mounted on the rotation support shaft and an outer wheel mounted on the ram, and the axial direction pressure application means applies a pressure in the axial direction to the bearing.

3. A work cutting apparatus as in claim 2, wherein the pair of upper and lower blades have an L-shape and the rotation support shaft is angled within the horizontal plane with respect to each side of the pair of upper and lower blades.

4. A work cutting apparatus as in any one of claim 1 through 3, wherein an eccentric system that moves the rotation pivot of the ram forwards and backwards is arranged and as the axial direction pressure application means supports the rotation pivot in the axial direction in a uniform position, a force is applied in the axial direction to the rotation pivot and moreover, the appleid pressure is removed in order to allow forward and backward movement of the rotation pivot.
